# FASCICULE DE BREVET EUROPEEN

(11) **EP 0 729 852 B1**
(45) Date de publication et mention de la délivrance du brevet: **30.05.2001**
(21) Numéro de dépôt: 96400377.6
(22) Date de dépôt: 23.02.1996
(51) Int. Cl.: B60B 35/16, B60K 17/16

(54) **Pont moteur de vehicule routier**
Achsbrücke eines Strassenfahrzeuges
Axle housing of road vehicle

(30) Priorité: 03.03.1995 FR 9502498
(43) Date de publication de la demande: 04.09.1996
(73) Titulaire: RENAULT VEHICULES INDUSTRIELS, 69003 Lyon (FR)
(72) Inventeur: Condamin, Bernard, 69440 Mormant (FR)
(74) Mandataire: Fernandez, Francis Lionel

(56) Documents cités:
- EP-A- 0 424 992
- DE-A- 2 500 666
- DE-A- 3 402 272
- FR-A- 2 307 194
- GB-A- 860 082
- GB-A- 2 257 402

## Description

La présente invention concerne un pont moteur de véhicule routier, notamment de poids lourd, destiné à supporter la charge du véhicule, tout en assurant le transfert de l'énergie libérée par le moteur du véhicule, à une paire de roues motrices.

Les ponts moteurs de véhicule comportent généralement un carter principal, ou carter de pont, renfermant un mécanisme différentiel chargé de répartir le couple entre les deux roues de l'essieu, auxquelles il est relié par des arbres de transmission.

Selon une disposition connue, illustrée par la publication FR 2.307.194, le carter principal, ou carter de différentiel d'un pont moteur est moulé en alliage léger, autour de coussinets permettant ultérieurement l'insertion de tubes d'essieu latéraux, et l'usinage de sièges de paliers, puis le montage des paliers de différentiel, et du différentiel. Les tubes d'essieu, obtenus par forgeage sont emmanchés dans les coussinets et soudés dans ces derniers. Ils présentent à leur extrémité opposée aux coussinets une partie restreinte, recevant les roulements de chaque roue. Traditionnellement, on vient ensuite souder les différents éléments de liaison au châssis et les attaches de frein sur les tubes d'essieu.

Le mode de fabrication rapporté dans la publication FR 2.307.194 permet d'obtenir des ponts arrière de poids lourds résistant à de fortes charges. Il présente cependant l'inconvénient de requérir un grand nombre d'opérations, et l'assemblage de multiples pièces.

La présente invention vise à simplifier la fabrication d'un pont moteur de véhicule routier.

Elle concerne un pont moteur de véhicule routier à carter principal moulé d'un seul bloc recevant dans des paliers de roulements un pignon d'entrée de mouvement et un mécanisme différentiel, entraîné par ledit pignon et présentant deux bras latéraux qui reçoivent les arbres de transmission.conduisant aux roues du véhicule et supportent les paliers de roulement de celles-ci.

Ce pont moteur est caractérisé en ce que le carter présente sur sa face arrière une ouverture fermée par un capot, et en ce qu'il intègre les zones d'appui intérieures des paliers du pignon et du mécanisme, ainsi que les zones d'appui extérieures des ressorts de suspension et des collerettes de fixation des freins.

Selon un premier mode de réalisation de l'invention, les bras latéraux supportent directement les paliers à roulements de chaque roue.

Selon un second mode de réalisation de l'invention, le pont moteur comporte des tubes d'extrémité insérés dans des bras latéraux, de façon à supporter les paliers à roulements de chaque roue.

De façon préférentielle, les bras latéraux intègrent des zones d'appui des ressorts de suspension, et des collerettes de fixation de freins.

L'invention propose également un procédé de fabrication d'un pont moteur. Ce procédé est caractérisé en ce que :
- on moule un carter principal d'un seul bloc présentant une ouverture arrière, et intégrant les zones d'appui intérieures des paliers du pignon d'entrée et du boîtier de différentiel, ainsi que les zones d'appui des ressorts de suspension, et les collerettes de fixation des freins,
- les zones d'appui intérieures du boîtier de différentiel sont usinées par l'ouverture arrière du carter,
- le pignon d'entrée et le boîtier de différentiel sont montés avec leur paliers dans le carter, puis
- les arbres de transmission sont réunis au boîtier de différentiel.

D'autres caractéristiques et avantages de l'invention apparaîtront clairement à la lecture de la description suivante d'un mode de réalisation particulier de celle-ci, en se reportant aux dessins annexés, sur lesquels :
- la figure 1 correspond à une coupe horizontale partielle du pont moteur de l'invention, et
- la figure 2 et la figure 3 illustrent deux variantes de celui-ci.

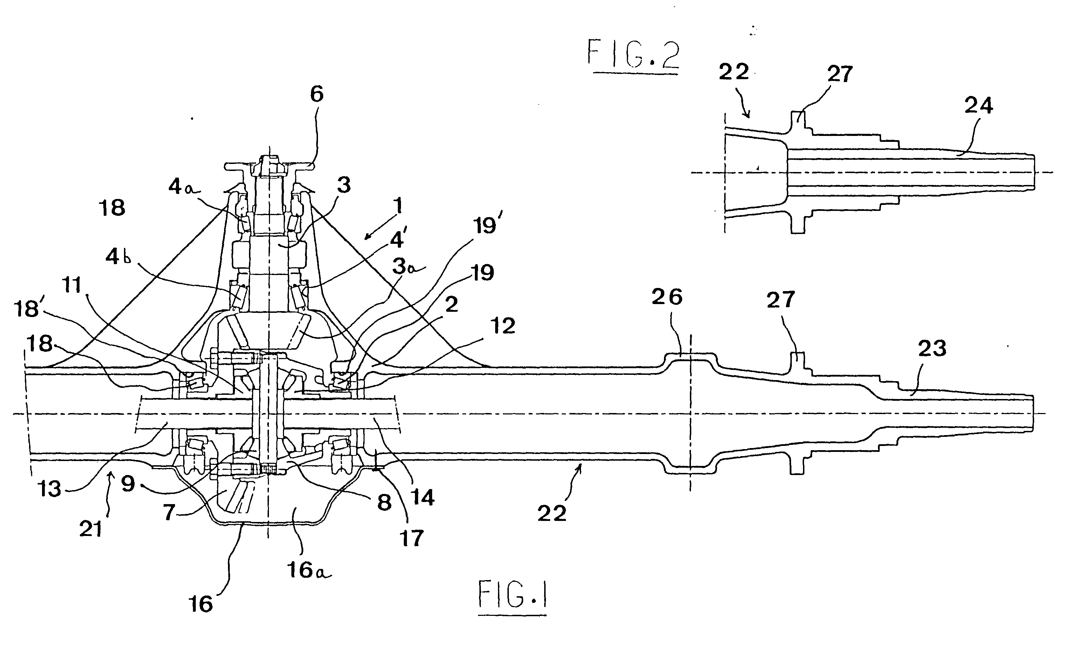

Le pont moteur de la figure 1 se compose d'un mécanisme central ou mécanisme différentiel 1, d'un carter principal 2, d'arbres de transmission 13, 14, et d'extrémités tournantes (non représentées), qui reçoivent les roues.

Le mécanisme central 1 comporte un pignon d'attaque 3, monté sur des roulements 4, et entraîné en rotation par l'intermédiaire d'un plateau tournant 6. Le pignon d'attaque 3 engrène avec la couronne 7 fixée sur le boîtier de différentiel 8, qui renferme plusieurs satellites 9 et deux planétaires de sortie 11, 12. De façon classique, la puissance du moteur est transmise par le pignon 3 à la couronne 7, puis aux arbres de roues 13, 14, par l'intermédiaire du boîtier 8, des satellites 9, et des planétaires 11, 12.

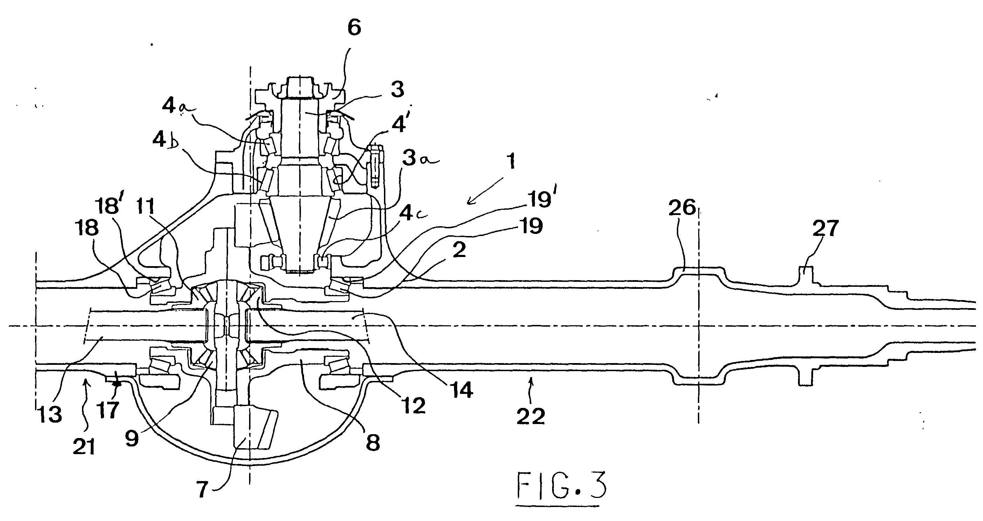

Le carter principal 2 est moulé d'une seule pièce, de préférence en fonte. Sur la figure 1, on voit qu'il présente une ouverture arrière 16a, sur sa face opposée au pignon d'attaque 3. L'ouverture 16a du carter 2 permet notamment d'introduire dans celui-ci une tête d'usinage des zones d'appui 18', 19' des paliers de support 18, 19 du boîtier 8, et de monter dans le carter 2 le mécanisme 1 avec lesdits paliers. Le carter 2 est fermé par un capot 16 fixé par plusieurs vis 17 devant l'ouverture arrière 16a. Il présente deux bras latéraux 21, 22, s'étendant en direction des roues, dont un seul apparaît entièrement sur les figures 1 et 3.

Selon le mode de réalisation de l'invention illustré par la figure 1, le pignon d'attaque 3 aligné sur l'axe 28 du différentiel 1, est monté sur deux paliers 4a, 4b, et les bras 21, 22 s'étendent jusqu'aux roues (non représentées), et présentent une partie d'extrémité, ou trompette, 23, destinée à supporter les paliers à roulements de chaque roue.

En variante, l'invention prévoit de raccourcir les bras 21, 22, et d'insérer dans ces derniers des tubes d'extrémités 24 s'étendant à l'extérieur du carter 2 pour supporter les roulements de roue. Cette variante de l'invention, dite à "trompettes rapportées", permet notamment d'utiliser un métal différent, par exemple de l'acier, pour les tubes de support de roue 24.

Selon une disposition particulière, représentée sur la figure 3, le pignon d'attaque 3 peut être déporté par rapport à l'axe 28 du différentiel. Dans ce cas, il est monté dans trois paliers à roulements 4a, 4b, 4c, dont deux sont disposés dans une partie avant 2a du carter, dite "boîtier du pignon d'attaque", tandis que le troisième, dit "roulement pilote" 4c, est situé en arrière de la denture 3a dudit pignon 3.

Enfin, il est possible de combiner les figures 2 et 3 en adoptant des trompettes rapportées, sur le carter de la figure 3.

Dans tous les cas, le carter 2 est une pièce moulée d'un seul bloc intégrant les zones d'appui 4', 18', 19' du pignon d'attaque 3 et du boîtier de différentiel 8, ainsi que des parties en saillie sur chaque bras latéral 21, 22, constituant les zones d'appui des ressorts de suspension, et les collerettes de fixation des mécanismes de freins.

La fabrication du pont moteur proposé par l'invention s'effectue donc en moulant d'un seul bloc une pièce intégrant tout ou partie des zones d'appui mentionnées ci-dessus. L'usinage des zones d'appui 4', 18', 19' est ensuite effectué à l'aide d'une tête d'usinage introduite dans le carter par l'extrémité arrière 16a de celui-ci, qui permet également de monter le pignon d'entrée 3 et le boîtier de différentiel 8 dans le carter 2, avant la mise en place des arbres de transmission 13, 14 dans les bras latéraux 21, 22 et leur assemblage au boîtier 8.

Parmi les avantages du pont moteur proposé par l'invention et de son procédé de fabrication, il faut noter :
- l'absence de soudures au niveau du raccordement des bras latéraux sur la partie centrale du carter,
- la réduction du nombre de pièces constitutives du pont moteur (tubes latéraux, coussinets d'insertion des tubes latéraux, patins d'appui des ressorts de suspension, brides de frein),
- la maîtrise de la forme, de l'épaisseur du carter et de la répartition des inerties sur l'ensemble du pont moteur,
- la possibilité d'intégrer des fonctions supplémentaires en fonderie, et
- une diminution de poids (environ 10 à 15 kg).

## Revendications

1. Pont moteur de véhicule routier à carter principal (2) moulé d'un seul bloc recevant dans des paliers de roulement (4a, 4b, 4c, 18, 19) un pignon d'entrée de mouvement (3) et un mécanisme différentiel (2) entraîné par ledit pignon (2), et présentant deux bras latéraux (21, 22) qui reçoivent les arbres de transmission (13, 14) conduisant aux roues du véhicule et supportent les paliers de roulement de celles-ci, caractérisé en ce que le carter (2) présente sur sa face arrière une ouverture (16a) fermée par un capot, et en ce qu'il intègre les zones d'appui intérieures (4', 18', 19') des paliers (4a, 4b, 4c, 18, 19) du pignon (3) et du mécanisme (2), ainsi que les zones d'appui extérieures (26, 27) des ressorts de suspension et des collerettes de fixation des freins (27).

2. Pont moteur selon la revendication 1, caractérisé en ce que les bras latéraux (21, 22) supportent directement les paliers à roulement de chaque roue.

3. Pont moteur selon la revendication 1, caractérisé en ce qu'il comporte des tubes d'extrémité (24) insérés dans les bras latéraux (21, 22), de façon à supporter les paliers à roulements de chaque roue.

4. Pont moteur selon la revendication 1, 2 ou 3, caractérisé en ce que le pignon d'attaque (3) est monté sur deux paliers à roulements (4a, 4b).

5. Pont moteur selon la revendication 1, 2 ou 3, caractérisé en ce que le pignon d'attaque (3) est monté sur trois paliers à roulements (4a, 4b, 4c).

6. Procédé de fabrication d'un pont moteur conforme à l'une des revendications précédentes, caractérisé en ce que :
- on moule un carter principal (2) d'un seul bloc présentant une ouverture arrière (16a), et intégrant les zones d'appui intérieures (4', 18', 19') des paliers du pignon d'entrée (3) et du boîtier de différentiel (8) ainsi que les zones d'appui (26) des ressorts de suspension, et les collerettes de fixation des freins (27),
- les zones d'appui intérieures (18', 19') du boîtier de différentiel (8) sont usinées par l'ouverture arrière (16a) du carter (2),
- le pignon d'entrée (3) et le boîtier de différentiel (8) sont montés avec leur paliers (4, 18, 19) dans le carter (2), puis
- les arbres de transmission sont réunis au boîtier de différentiel (8).

7. Procédé selon la revendication 6, caractérisé en ce que des pièces de support (24) des paliers de roues sont insérées à l'extrémité des bras latéraux (21, 22) du carter (2).

## Claims

1. A road vehicle drive axle having a main housing (2) cast in one piece and receiving in rolling bearings (4a, 4b, 4c, 18, 19) a motion input pinion (3) and a differential mechanism (2) driven by said pinion (3), and having two lateral arms (21, 22) which receive the transmission shafts (13, 14) leading to the wheels of the vehicle and support the rolling bearings thereof, characterised in that on its rear face the housing (2) has an opening (16a) which is closed by a cover, and that it integrates the internal support zones (4', 18', 19') of the bearings (4a, 4b, 4c, 18, 19) of the pinion (3) and the mechanism (1) and the external support zones (26, 27) of the suspension springs and the flanges (27) for mounting the brakes.

2. A drive axle according to claim 1 characterised in that the lateral arms (21, 22) directly support the rolling bearings of each wheel.

3. A drive axle according to claim 1 characterised in that it comprises end tubes (24) inserted into the lateral arms (21, 22) in such a way as to support the rolling bearings of each wheel.

4. A drive axle according to claim 1, claim 2 or claim 3 characterised in that the drive pinion (3) is mounted on two rolling bearings (4a, 4b).

5. A drive axle according claim 1, claim 2 or claim 3 characterised in that the drive pinion (3) is mounted on three rolling bearings (4a, 4b, 4c).

6. A process for producing a drive axle according to one of the preceding claims characterised in that
- a main housing (2) is cast in one piece having a rear opening (16a) and integrating the internal support zones (4', 18', 19') of the bearings of the input pinion (3) and the differential casing (8) and the support zones (26) of the suspension springs, and the flanges (27) for mounting the brakes,
- the internal support zones (18', 19') of the differential casing (8) are machined through the rear opening (16a) of the housing (2),
- the input pinion (3) and the differential casing (8) are mounted with their bearings (4, 18, 19) in the housing (2), and then
- the transmission shafts are connected to the differential casing (8).

7. A process according to claim 6 characterised in that support portions (24) for the wheel bearings are inserted at the end of the lateral arms (21, 22) of the housing (2).

## Patentansprüche

1. Achsbrücke für Straßenfahrzeuge, mit einem einstückig hergestellten Zentralgehäuse (2), in dem in Wälzlagern (4a, 4b, 4c, 18, 19) ein drehmomentübertragendes Eingangsritzel gelagert ist, sowie ein Differential (2), das vom Ritzel (3) angetrieben wird, wobei seitliche Achsrohre (21, 22) vorgesehen sind, in denen Achswellen (13, 14) für die Räder des Fahrzeugs eingesetzt sind sowie Wälzlager für diese, dadurch gekennzeichnet, dass das Zentralgehäuse (2) auf seiner rückwärtigen Seite eine Öffnung (16a) aufweist, die durch einen Deckel verschlossen ist und dass es innere Stützbereiche (4', 18', 19') für die Wälzlager (4a, 4b, 4c, 18, 19) des Ritzels (3) und des Differential (2) aufweist, sowie äußere Stützflächen (26, 27) für die Stoßdämpferfedern und die Befestigungsmanschetten (27) der Bremsen.

2. Achsbrücke nach Anspruch 1, dadurch gekennzeichnet, dass die Achsrohre (21, 22) direkt die Radlager für die beiden Räder tragen.

3. Achsbrücke nach Anspruch 1, dadurch gekennzeichnet, dass sie Endrohre (24) aufweist, die in die Achsrohre (21, 22) derart eingesetzt sind, dass erstere die Radlager für die beiden Räder tragen.

4. Achsbrücke nach Ansprüchen 1, 2 oder 3, dadurch gekennzeichnet, dass das Eingangsritzel (3) in zwei Wälzlagern (4a, 4b) gelagert ist.

5. Achsbrücke nach Ansprüchen 1, 2 oder 3, dadurch gekennzeichnet, dass das Eingangsritzel (3) in drei Wälzlagern (4a, 4b, 4c) gelagert ist.

6. Verfahren zur Herstellung einer Achsbrücke nach einem der vorhergehenden Ansprüche, dadurch gekennzeichnet, daß:
- ein Zentralgehäuse (2) einstückig hergestellt wird, das eine rückwärtige Öffnung (16a) aufweist und in dem innere Stützbereiche (4', 18', 19') hergestellt werden für die Lager des Eingangsritzels (3) und für das Differentialgehäuse (8) sowie Stützbereiche (26) für die Stoßdämpferfedern und die Befestigungsmanschetten (27) der Bremsen,
- die inneren Stützbereiche (18', 19') für das Differentialgehäuse (8) durch die rückwärtige Öffnung(16a) im Zentralgehäuse (2) hindurch bearbeitet werden,
- das Eingangsritzel (3) und das Differentialgehäuse (8) zusammen mit ihren Lagern (4, 18, 19) in das Zentralgehäuse (2) eingebaut werden und
- die Achswellen mit dem Differentialgehäuse (8) verbunden werden.

7. Verfahren nach Anspruch 6, dadurch gekennzeichnet, dass Tragrohre (24) für die Radlager in die Enden der Achsrohre (21, 22) des Zentralgehäuses (2) eingesetzt werden.
